Europäisches Patentamt

(19) European Patent Office

Office européen des brevets

(11) Publication number : **0 327 087 B1**

(12) **EUROPEAN PATENT SPECIFICATION**

(45) Date of publication of patent specification :
22.01.92 Bulletin 92/04

(51) Int. Cl.⁵ : **D06F 58/08,** H02K 5/00

(21) Application number : **89101814.5**

(22) Date of filing : **02.02.89**

(54) **Mounting and securing device for the actuating motor of a drum-equipped laundry drier.**

(30) Priority : **04.02.88 IT 3400488 U**

(43) Date of publication of application :
**09.08.89 Bulletin 89/32**

(45) Publication of the grant of the patent :
**22.01.92 Bulletin 92/04**

(84) Designated Contracting States :
**DE FR GB IT NL**

(56) References cited :
**FR-A- 899 166**
**GB-A- 2 184 611**
**US-A- 3 790 114**

(73) Proprietor : **INDUSTRIE ZANUSSI S.p.A.**
**Via Giardini Cattaneo 3**
**I-33170 Pordenone (IT)**

(72) Inventor : **Gasparin, Maurizio**
**Via Selvatico 10**
**I-33170 Pordenone (IT)**

(74) Representative : **Patentanwälte Grünecker,**
**Kinkeldey, Stockmair & Partner**
**Maximilianstrasse 58**
**W-8000 München 22 (DE)**

## Description

The present invention relates to a mounting and securing device for the electric motor of a rotary drum-equipped laundry drier for domestic use. In machines of this type, the electric motor employed for rotating the drum containing the laundry, and at least one blower for the circulation of the drying air, is usually secured to a metal mounting cradle itself secured to the frame base of the housing of the machine. This solution requires a considerable number of individual components and a corresponding number of separate operations during assembly.

With a view to simplifying these assembly operations, British Patent Application no. 2,184,611 proposes a solution for mounting the motor in open seats of a metal cradle by means of a one-piece plastic element adapted to embrace the mounting flange of the motor for securing it to the respective seat of the mounting cradle.

In recent years there has been a growing tendency to provide electric household appliances of this type with an integrally formed plastic bottom frame which may be integrally provided with seats for mounting various functional components such as the motor, a blower assembly, a condenser assembly and the like, as described for instance in German Patent Application no. 3,135,292.

The construction of a bottom frame of this type suffers from the disadvantage of requiring a mold of rather complicated shape for forming the mounting seats for the various components, and of elevated costs for the considerable amount of material required for forming the mounting seat of the motor.

In particular, the provision of the mounting seat for the motor requires a bottom frame of considerable height and thickness for imparting the necessary strength to the vertical supports of the motor. To this increased height and thickness of the bottom frame corresponds a diminution of the useful internal space of the machine, so that the motor has to be accommodated in a restricted corner, with the resultant danger of overheating due to insufficient ventilation. Other disadvantageous aspects of a bottom frame of this type ar a lack of flexibility, inasmuch as the designer is compelled to mount the various components only at the locations provided with the respective vertical supports, and the difficulty in gaining access to the functional components of the machine in the course of maintenance operations. As a matter of fact, the various components are secured to fixed vertical structures and can only be dismounted with difficulty due to the restricted free space available for the vertically directed movements of the dismounting operation.

For the reasons set forth above, the main object of the invention is the provision of a device for mounting and securing an electric motor on a one-piece plastic bottom frame of a laundry drier for domestic use, such device to be of simple construction and rational use propoerties. The device according to the invention should also simplify the construction of the bottom frame and rationalize the operations of mounting and dismounting the motor on and from, respectively, the bottom frame.

A further object of the invention is the provision of a device of the type described which results in a greater flexibility in the employ of the one-piece bottom frame of a laundry drier.

According to the invention these and other objects are attained in a device for mounting and securing the actuating motor of a laundry drier for securing in a freely rotatable manner, the end shields of the motor on a conventional one-piece plastic bottom frame of the housing of a domestic laundry drier, said device comprising two plastic members integrally provided with means for accommodating, in a freely rotatable manner, the end shields of said motor, and means for rapid connection to corresponding guide and locking means provided on said one-piece bottom frame of the laundry drier.

The characteristics of the invention will become more clearly evident from the following description, given by way of example with reference to the accompanying drawings, wherein :

fig. 1    shows a cross-sectional view as seen from the rear of a laundry drier provided with a device according to the invention,

fig. 2    shows an enlarged detail of fig. 1, likewise as seen from the rear, and

fig. 3    shows a longitudinally sectioned view of the device according to the invention.

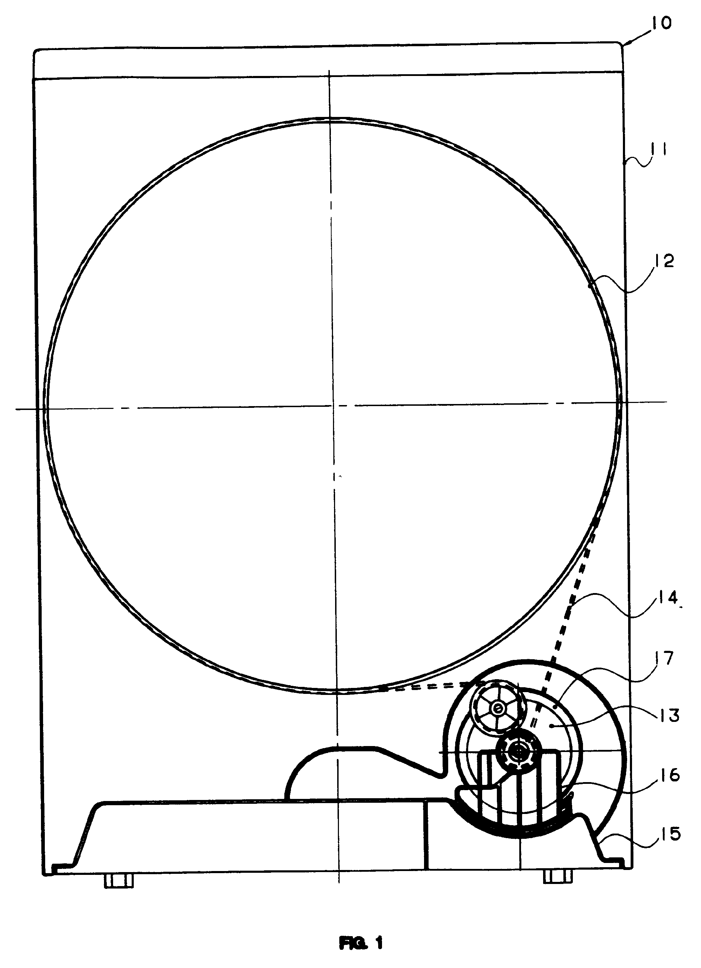

A laundry drier 10 shown in fig. 1 comprises an outer housing 11 accommodating a laundry drum 12 mounted therein for rotation about a horizontal axis. Drum 12 is adapted to be rotated by an electric motor 13 the driving power of which is transmitted by a conventional belt drive system 14.

Laundry drier 10 has a conventional one-piece plastic bottom frame 15 formed with seats and supports for mounting various functional components, and with portions (not shown in the drawings) of conduits for the drying air or condenser air.

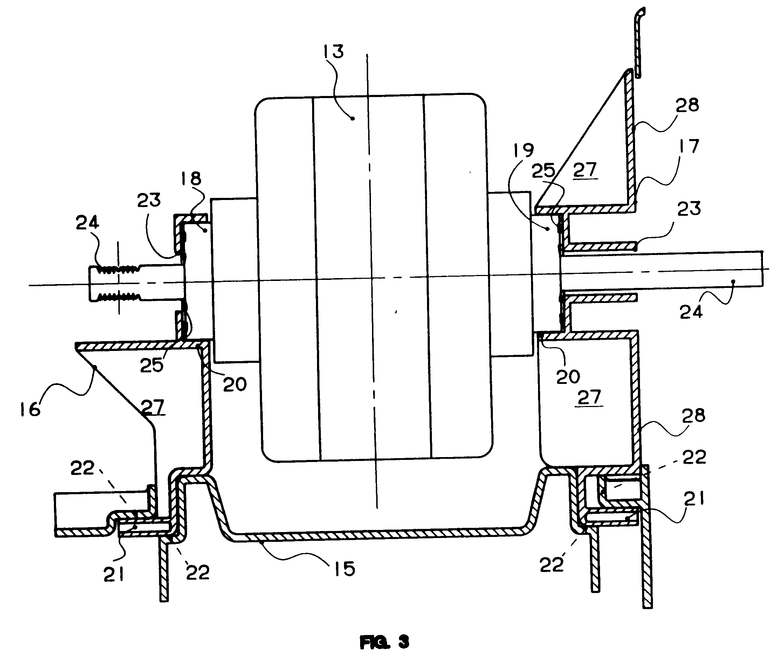

According to the invention, two support elements 16, 17 (fig. 3) are provided for engaging, in an oscillating manner, the end shields 18, 19 of motor 13 for anchoring them on bottom frame 15. Each support element 16, 17 is formed as a one-piece member of a thermoplastic material, for instance polypropylene, by an injection-

EP 0 327 087 B1

molding process. Each element 16, 17 substantially comprises a seat portion 20 for accommodating, in a freely rotatable manner, the respective end shield of electric motor 13, and an anchoring portion 21 adapted to be inserted into, and retained in, corresponding guides 22 formed on bottom frame 15 (fig. 3).

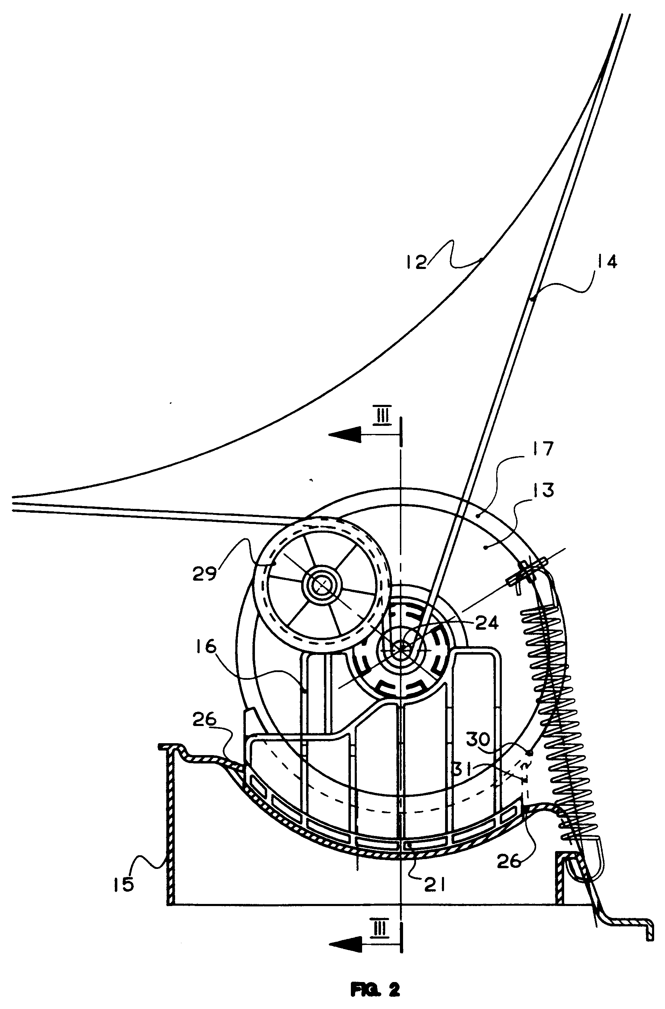

Similar to what has already been described in the British Patent Application no. 2,184,611 cited above, each support element 16, 17 is formed with a circular opening 23 for the passage therethrough of the respective end portion of the motor shaft 24, and a circular seat portion 20 of L-shaped cross-sectional configuration for accommodating the respective end shield of motor 13. The vertical wall of the L-section is provided in a known manner with resilient tongues 25 for dampening any horizontal oscillations of motor 13. Formed at the lower part of each element 16, 17 is the respective anchoring portion 21 having an arcuate contour and an L-shaped cross-sectional configuration for engaging respective guides 22 formed on bottom frame 15. Integrally formed adjacent both ends of each guide 22 are detent lugs 26, the detent lug 26 located at the end through which the respective anchoring portion 21 is inserted being sufficiently resilient for enabling it to be depressed as anchoring portion 21 is inserted into the respective guide 22, and to resume its detent position after anchoring portion 21 has completely entered guide 22. At the opposite end of each guide 22 the respective detent lugs 26 are sufficiently rigid for acting as a stop for the leading end of the respective anchoring portion 21. As an alternative to detent lugs 26, the insertion end of each support element 16, 17 may be provided with an integrally formed resilient catch 30 adapted to be engaged with a corresponding ledge 31 integrally formed adjacent the respective end of each guide 22 as indicated by dotted lines in fig. 2. Each support element 16, 17 is provided with strengthening ribs 27 and may be of a shape permitting it to perform any additional functions as may be required.

The rear support element 17 of motor 13 may thus for instance include a wall 28 acting as a closure of the casing of a blower fan (not shown) connected to shaft 24. With the device according to the invention, the operations of mounting and dismounting motor 13 on, or from, bottom frame 15 are considerably simplified. For mounting the motor, the two support elements 16 and 17 are simply slipped onto the end shoelds 18, 19 of the motor 13, whereupon the respective anchoring portions 21 are inserted into the guides 22 on bottom frame 15. In this manner motor 13 is rotatably mounted on the one-piece bottom frame, and a conventional belt-tensioning pulley 29 (fig.2) may be mounted on an outer portion of its end shield for tensioning the belt in response to the rotation of shaft 24. Motor 13 may be dismounted in a similarly simple manner by depressing resilient detent lugs 26, or disengaging resilient catch 30 from ledge 31 formed on guide 22, whereupon anchoring portions 21 can be withdrawn from guides 22.

The main advantage of the mounting and securing device according to the invention resides in the fact that a single readily mountable and dismountable element performs the double function of a support cradle and of an anchoring element for the motor.

The described device thus attains the main object of providing a mounting and securing device of simple construction and efficient operation. The invention additionally simplifies and renders more economical the construction of the bottom frame, because the structural function of the motor support is substantially performed by components provided separately of the bottom frame. This characteristic offers the additional advantage of permitting motors of different dimensions to be mounted on one and the same bottom frame by merely modifying the two support elements. In addition, the mounting and dismounting of the motor can be carried out with substantially horizontal movements, thereby facilitating maintenance operations in the constricted space within the dryer. The mounting and securing device according to the invention finally results in a greater flexibility in the employ of the one-piece bottom frame 15, permitting it to be advantageously standardized for the whole range of production models. In this case bottom frame 15 may be provided with a number of guides 22 at different locations for mounting the motor at various positions as required for the assembly of different dryer models.

The mounting and securing device according to the invention may of course undergo various modifications or alterations within the scope of the appended claims.

## Claims

1. A device for mounting and securing the actuating motor (13) of a laundry drier for securing in a freely rotatable manner, the end shields (18, 19) of said motor on a conventional one-piece plastic bottom frame of the housing of a domestic laundry drier, characterized by comprising two plastic elements (16, 17) integrally provided with means (20, 23) for accommodating, in a freely rotatable manner, said end shields (18, 19) of said motor (13), and means (21) for rapid connection to corresponding guides (22) and detent means (26, 31) provided on said one-piece bottom frame (15) of the laundry drier (10).

2. A device according to claim 1, wherein said means for accommodating said end shields (18, 19) of said motor (13) comprise a circular opening (23) and a surrounding seat (20) adapted respectively to permit the passage of an end portion of the motor shaft (24) and to accommodate, in a freely rotatable manner, the respective

EP 0 327 087 B1

end shield of said motor in cooperation with oscillation dampening means (25) formed integrally with said seat (20), characterized in that said rapid connection means comprise an anchoring portion (21) having an arcuate contour and an L-shaped cross-sectional configuration adapted to be slidingly received in corresponding guides (22) provided on said bottom frame (15) of the laundry drier (10), said detent means (26) for said anchoring portion (21) comprising detent lugs (26) formed integrally adjacent end portions of said guides (22) and adapted to engage at least the trailing end of said anchoring portion (21) in a snap fit.

3. A device according to any of the preceding claims, characterized in that said detent means comprise a resilient catch (30) formed at the leading insertion end of each support element (16, 17) and adapted to be engaged with a corresponding detent ledge (31) integrally formed adjacent at least one end of the respective guide (22).


**Patentansprüche**

1. Vorrichtung zum Montieren und Befestigen des Antriebsmotors (13) eines Wäschetrockners zum Halten der Endschilde (18, 19) des Motors in frei drehbarer Weise an einem üblichen einstückigen Plastikbodenrahmen des Gehäuses eines Haushaltswäschetrockners, dadurch gekennzeichnet, daß sie zwei Plastikelemente (16, 17) aufweist, die integral mit Einrichtungen (20, 23) versehen sind, um in frei drehbarer Weise die Endschilde (18, 19) des Motors (13) aufzunehmen, und daß sie Einrichtungen (21) zum schnellen Anschluß an entsprechende Führungen (22) und Arretiervorrichtungen (26, 31) aufweist, die an dem einstückigen Bodenrahmen (15) des Wäschetrockners (10) ausgebildet sind.

2. Vorrichtung nach Anspruch 1, bei der die Einrichtungen zum Aufnehmen der Endschilde (18, 19) des Motors (13) eine kreisförmige Öffnung (23) und einen umlaufenden Sitz (20) aufweisen, die dazu eingerichtet sind, den Durchgang eines Endabschnitts der Motorwelle (24) zu gestatten bzw. den betreffenden Endschild des Motors in frei drehbarer Weise im Zusammenwirken mit Schwingungsdämpfungseinrichtungen (25) aufzunehmen, die integral mit dem Sitz (20) ausgebildet sind, dadurch gekennzeichnet, daß die Schnellverbindungseinrichtungen ein Verankerungsteil (21) mit bogenförmigem Umriß und einer L-förmigen Querschnittsgestalt aufweisen, das dazu eingerichtet ist, gleitend in entsprechenden Führungen (22) aufgenommen zu werden, die an dem Bodenrahmen (15) des Wäschetrockners (10) ausgebildet sind, wobei die Feststellvorrichtungen (26) für das Verankerungsteil (21) Feststellnasen (26) sind, die integral benachbart den Endabschnitten der Führungen (22) ausgebildet sind und dazu dienen, wenigstens das hintere Ende des Verankerungsabschnitts (21) verrastend zu ergreifen.

3. Vorrichtung nach einem der vorhergehenden Ansprüche, dadurch gekennzeichnet, daß die Feststellvorrichtungen eine nachgiebige Klinke (30) aufweisen, die am vorderen Einsatzende eines jeden Halteelements (16, 17) ausgebildet und dazu eingerichtet sind, von einem entsprechenden Feststellbund (31) ergriffen zu werden, der integral benachbart wenigstens einem Ende der betreffenden Führung (22) ausgebildet ist.


**Revendications**

1. Dispositif pour monter et fixer le moteur d'actionnement (13) d'un sèche linge pour fixer, de manière qu'ils puissent librement tourner, les blindages terminaux (18, 19) de ce moteur sur un châssis inférieur monobloc conventionnel en matière plastique du coffre d'un sèche-linge domestique, caractérisé en ce qu'il comporte deux éléments en matière plastique (16, 17) équipés d'un seul tenant avec des moyens (20, 23) pour recevoir, de manière qu'ils puissent tourner librement, les blindages terminaux (18, 19) du moteur (13), et des moyens (21) pour se raccorder rapidement à des guides correspondants (22) et des moyens d'arrêt (26, 31) prévus sur le châssis inférieur monobloc (15) du sèche-linge (10).

2. Dispositif selon la revendication 1, dans lequel les moyens pour recevoir les blindages terminaux (18, 19) du moteur (13) comportent une ouverture cylindrique (23) et un siège l'entourant (20) adaptés respectivement pour permettre le passage d'une portion terminale de l'arbre (24) du moteur et pour recevoir, de manière qu'il puisse tourner librement, le blindage terminal respectif du moteur en coopération avec des moyens d'amortissement d'oscillations (25) formés d'un seul tenant avec le siège (20), caractérisé en ce que les moyens de raccordement rapide comportent une portion de fixation (21) ayant un contour courbe et la forme d'un L en section transversale, adaptée pour être reçue en coulissement dans des guides correspondants (22) prévus sur le châssis inférieur (15) du sèche-linge (10), les moyens d'arrêt (26) pour la portion de fixation (21) comprenant des pattes d'arrêt (26) formées d'un seul tenant, adjacentes aux portions terminales des guides (22), et adaptées pour coopérer par encliquetage au moins avec l'extrémité arrière de la portion de fixation (21).

3. Dispositif selon l'une des revendications précédentes, caractérisé en ce que les moyens d'arrêt comprennent un doigt de verrouillage élastique (30) formé à l'extrémité avant d'introduction de chaque élément support (16, 17) et adapté pour coopérer avec une saillie d'arrêt correspondante (31) formée d'un seul tenant adjacente à au moins une extrémité du guide respectif (22).

FIG. 1

FIG. 2

FIG. 3